# EUROPEAN PATENT SPECIFICATION

(11) **EP 0 621 105 B1**
(45) Date of publication and mention of the grant of the patent: **30.12.1998**
(21) Application number: 94302868.8
(22) Date of filing: 22.04.1994
(51) Int. Cl.: B23P 19/00, B23Q 7/10

(54) **Separator/feeder for headed fasteners**
Separator/Zuführvorrichtung für Befestigungselemente mit Kopf
Séparateur/dispositif d'alimentation pour élément de fixation à tête

(30) Priority: 23.04.1993 JP 21465/93 U
(43) Date of publication of application: 26.10.1994
(73) Proprietor: EMHART INC., Newark, Delaware 19711 (US)
(72) Inventor: Yamada, Hiroyuki, Toyohashi City Aichi-Ken (JP)
(74) Representative: Stagg, Diana Christine

(56) References cited:
- CH-A- 369 648
- JP-U-57 135 523
- US-A- 4 694 974

## Description

The present invention relates to a separator/feeder for headed fasteners, sent one by one in a line from a chute rail, and to feed them to a fastener setting machine or the like, comprising the features of the preamble of claim 1 (of JP-U-57-135523).

Such a separator/feeder for headed fastener for headed fasteners, is disclosed, for example, in Japanese Utility Model No. 57-135523. Such devices are widely used with automatic fastener setting machines since they can separate and feed headed fasteners, sent one by one in a line from a chute rail and feed them to a fastener setting machine.

The conventional separator/feeder for headed fastener as described in the publication referred to above has a mechanism which is complex in structure using a cam, a sliding plate and a spring and the device itself is inevitably large in size.

It is an object of the present invention to provide a small and simply constructed separator/feeder for headed fasteners. This object is achieved by means of a separator/ feeder Comprising the features of claim 1.

There is provided a separator/feeder for headed fasteners for separating headed fasteners, sent one by one in a line from a chute rail, and feeding them to a fastener setting machine or the like; characterised in that the separator/feeder has a housing having an inlet to receive headed fasteners from the chute rail and an outlet to feed the headed fasteners to the fastener setting machine, a drum rotatably mounted in the housing and means to rotate the drum, and the drum is formed with a recessed portion at a position corresponding to the inlet of the housing to receive the headed fasteners one only at a time; said recessed portion being provided with a pin extending diametrically from the opposite side, the pin being normally biased to a retracted position so as to allow the fastener to get into the recessed portion, the housing also being provided with a path for receiving the headed fastener received in the recessed portion of the rotated drum and sending it to the outlet, the housing being provided with means to extend the pin into the recessed portion when the recessed portion of the rotated drum meets the path so that the headed fastener in the recessed portion can be sent onto the path.

In order that the invention be better understood, a preferred embodiment will now be described in further detail by way of example with reference to and as illustrated by the accompanying drawings in which:-
Figure 1 is a perspective view of a separator/feeder for headed fasteners embodying to the present invention;
Figure 2 is a vertical sectional view of the separator/feeder in the condition in which it receives headed fasteners;
Figure 3 is a sectional view taken along the line A-A of Figure 2;
Figure 4 is a vertical sectional view of the separator/feeder in the state in which it delivers headed fasteners;
Figure 5 is a sectional view taken along the line B-B of Figure 4, and
Figure 6 is a sectional view taken along the line C-C of Figure 4.

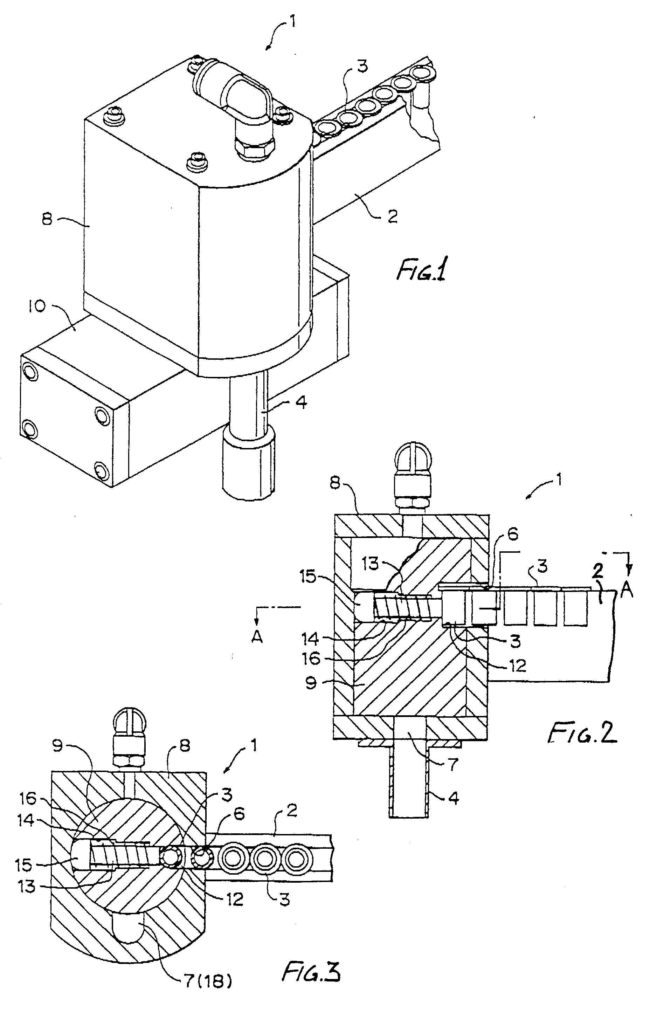

In this embodiment, blind nuts are used as headed fasteners (3), although other types of headed fasteners may be used. In Figures 1 through 3, the separator/feeder (1) for headed fastener according to the present invention separates the headed fasteners, which are sent from a chute rail (2) with their heads uppermost and arranged in a line, one by one, and feeds them through a feed tube (4) to a fastener setting machine or the like. The separator/feeder (1) has a housing (8) having an inlet (6) to receive the headed fasteners (3) from the chute rail (2) and an outlet (7) which is directly connected to the feed tube (4) and feeds the fasteners to the fastener setting machine, a drum (9) rotatably mounted in the housing (8), and an actuator (10) which can rotate the drum (9), for example, through 90 degrees.

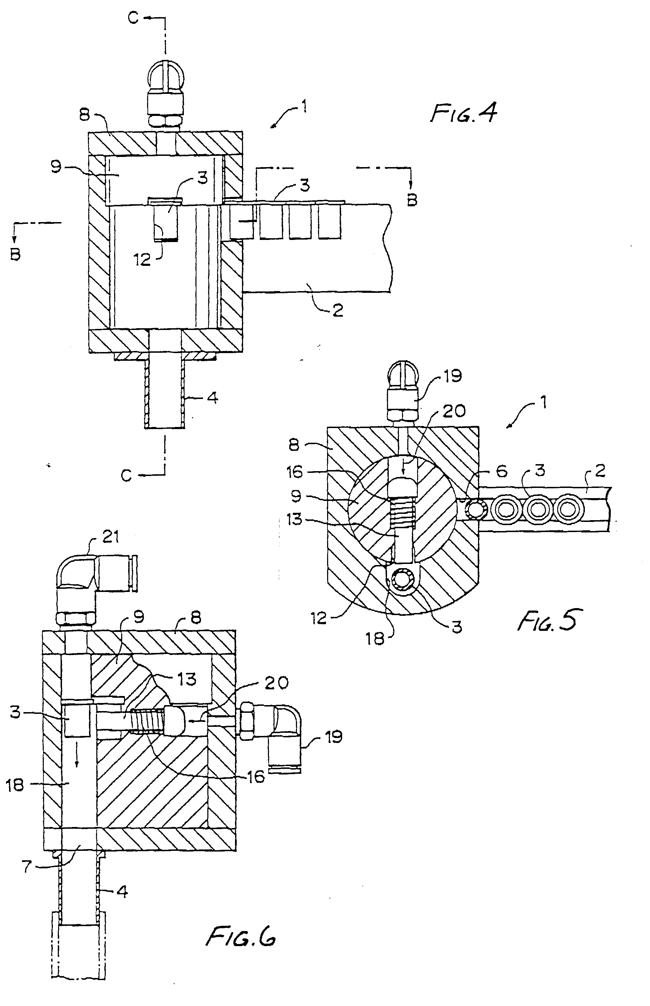

At a position corresponding to the inlet (6) of the housing (8), the drum (9) is provided with a recessed portion (12) which receives the headed fasteners (3) one only at a time. The recessed portion (12) is provided with a pin (13) extending diametrically from a side of the drum which faces the recessed portion. The drum (9) is formed with a hole (14) diametrically passing through it in the recessed portion (12) for attaching the pin (13). On the opposite side to the recessed portion (12), the pin has a diametrically large head portion (15) to prevent the end of the pin from extending beyond the drum surface on the housing side when the pin is pressed into the recessed portion side. Thus, the pin is prevented from interfering with the rotation of the drum (9). The pin (13) is normally biased to a retracted position by means of a spring (16) to allow the headed fastener to be accommodated in the recessed portion (12). When drum (9) is positioned as shown in Figures 2 and 3 only one headed fastener (3) is received at a time in the recessed portion (12) of the drum (9) upon arrival of the headed fastener (3) from the chute rail (2). Figures 4 through 6 show the drum (9) rotated through 90 degrees by the actuator (10). These drawings are also referred to in the following description.

The housing (8) is provided with a path (18) which receives the headed fastener (3) staying in the recessed portion (12) of the drum (9) rotated through 90 degrees by the actuator (10) and sends it to outlet (7). The path (18) is shown most clearly in Figure 6. Further, housing (8) is provided with means to extend the end of the pin (13) into the recessed portion (12) when the recessed portion of the drum (9) rotated through 90 degrees meets the path (18). In the illustrated embodiment, the means comprises a pressurised air supplying portion (19). Pressurised air is supplied from the portion (19) to the head portion (15) of the pin (13). The pin (13) which is resiliently biased by the spring (16), is then pressed as indicated by arrow (20) in Figures 5 and 6, and this sends the headed fastener (3) located in the recessed portion (12) onto the path (18). The headed fastener (3) sent to the path (18) is fed to the feed tube (4) through the outlet (7) by means of gravity. In order that the headed fastener (3) thus sent out can be fed to the setting machine through the feed tube (4), it is preferable that a second pressurised air supplying port (21) is provided behind the path (18) (the top side in Figure 6), which is adapted to supply pressurised air after the headed fastener (3) is sent from the recessed portion (12) by means of the pin (12). The means to force the pin (13) in may be provided by a solenoid or the like adapted to press it in mechanically.

Thus the present invention provides an inexpensive and simply constructed separator/feeder for headed fasteners which does not requires a cam, a slide plate or similar more complex structures.

## Claims

1. A separator/feeder (1) for headed fasteners (3), sent one by one in a line from a chute rail (2), to feed them to a fastener setting machine or the like; whereby the separator/feeder (1) has a housing (8) having an inlet (6) to receive headed fasteners (3) from the chute rail (2) and an outlet (7) to feed the headed fasteners (3) to the fastener setting machine, a drum (9) rotatably mounted in the housing (8) and means (10) to rotate the drum (9), and the drum (9) is formed with a recessed portion (12) at a position which in a first rotatable position of the drum (9) corresponds to the inlet (6) of the housing (8) to receive the headed fasteners (3) one only at a time; characterised in that said recessed portion (12) is provided with a pin (13) extending diametrically from the opposite side of the drum (9), the pin being normally biased to a retracted position so as to allow the fastener (3) to get into the recessed portion (12), the housing (8) also being provided with a path (18) for receiving the headed fastener (3) received in the recessed portion (12) of the rotated drum (9) in a second rotatable position and sending it to the outlet (7), the housing (8) being provided with means (19) to extend the pin (13) into the recessed portion (12) when the recessed portion (12) of the rotated drum (9) meets the path (18) so that the headed fastener (3) in the recessed portion (12) can be sent onto the path (18).

## Patentansprüche

1. Separator/Zuführvorrichtung (1) für Befestigungselemente (3) mit Kopf, die einzeln in einer Reihe von einer Rutschenschiene (2) geschickt werden, um sie zu einer Befestigungselement-Setzmaschine oder dergleichen zu fördern, wobei die Separator/Zuführvorrichtung (1) ein Gehäuse (8) mit einem Einlaß (6) zum Aufnehmen von Befestigungselementen (3) mit Kopf von der Rutschenschiene (2) und mit einem Auslaß (7) zum Zuführen der Befestigungselemente (3) mit Kopf zu der Befestigungselement-Setzmaschine, eine Trommel (9), die drehbar in dem Gehäuse (8) angeordnet ist und eine Einrichtung (10) aufweist, um die Trommel (9) zu drehen, wobei die Trommel (9) in einer Position mit einem ausgesparten Abschnitt (12) ausgebildet ist, welche in einer ersten Drehposition der Trommel (9) dem Einlaß (6) des Gehäuses (8) entspricht, um nur jeweils eines der Befestigungselemente (3) mit Kopf aufzunehmen; dadurch gekennzeichnet,
daß der ausgesparte Abschnitt (12) mit einem Stift (13) versehen ist, der sich diametral von der gegenüberliegenden Seite der Trommel (9) erstreckt, daß der Stift normalerweise in eine zurückgezogene Position vorgespannt ist, um es dem Befestigungselement (3) zu gestatten, in den ausgesparten Abschnitt (12) zu gelangen, daß das Gehäuse (8) weiterhin mit einer Bahn bzw. einem Pfad (18) zum Aufnehmen des Befestigungselements (3) mit Kopf versehen ist, welches in dem ausgesparten Abschnitt (12) der gedrehten Trommel (9) in einer zweiten Drehposition aufgenommen ist und zum Fördern zu dem Auslaß (7), daß das Gehäuse (8) mit einer Einrichtung (19) versehen ist, um den Stift (13) in den ausgesparten Abschnitt (12) auszufahren, wenn der ausgesparte Abschnitt (12) der gedrehten Trommel (9) mit dem Pfad (18) zusammentrifft, so daß das Befestigungselement mit Kopf (3) in dem ausgesparten Abschnitt (12) auf dem Pfad (18) bewegt werden kann.

## Revendications

1. Distributeur/séparateur (1) pour des organes de fixation à tête (3), envoyés un par un dans une ligne depuis un rail de chute (2), pour les distribuer à une machine de pose d'organes de fixation ou analogue, de sorte que le distributeur/séparateur (1) comprend un boîtier (8) ayant une entrée (6) pour recevoir des organes de fixation à tête (3) depuis le rail de chute (2) et une sortie (7) pour distribuer les organes de fixation à tête (3) à la machine de pose d'organes de fixation, un tambour (9) monté rotatif dans le boîtier (8) et des moyens (10) pour faire tourner le tambour (9), le tambour (9) étant formé avec une partie évidée (12) au niveau d'une position qui, dans une première position de rotation du tambour (9) correspond à l'entrée (6) du boîtier (8) pour recevoir les organes de fixation à tête (3) l'un seulement à la fois, caractérisé en ce que ladite partie évidée (12) est munie d'une broche (13) s'étendant diamétralement depuis le côté opposé du tambour (9), la broche étant normalement sollicitée vers une position rétractée de manière à permettre à l'organe de fixation (3) de pénétrer dans la partie évidée (12), le boîtier (8) étant également muni d'un passage (18) pour recevoir l'organe de fixation à tête (3) reçu dans la partie évidée (12) du tambour (9) qui a pivoté dans une seconde position de rotation et l'envoyer vers la sortie (7), le boîtier (8) étant muni de moyens (19) pour avancer la broche (13) dans la partie évidée (12) lorsque la partie évidée (12) du tambour (9) qui a pivoté rejoint le passage (18) de sorte que l'organe de fixation à tête (3) dans la portion évidée (12) peut être envoyé dans le passage (18).
